# FASCICULE DE BREVET EUROPEEN

(11) **EP 1 034 525 B1**
(45) Date de publication et mention de la délivrance du brevet: **31.05.2006**
(21) Numéro de dépôt: 99913367.1
(22) Date de dépôt: 09.04.1999
(51) Int. Cl.: G08G 1/127

(54) **PROCEDE ET DISPOSITIF DE DECLENCHEMENT AUTOMATIQUE D'UN APPEL D'URGENCE A PARTIR D'UN VEHICULE**
VERFAHREN UND VORRICHTUNG ZUR AUTOMATISCHEN AUSSENDUNG VON NOTRUFSIGNALEN AUS EINEM KRAFTFAHRZEUG
METHOD AND DEVICE FOR AUTOMATICALLY TRIGGERING AN EMERGENCY SIGNAL FROM A VEHICLE

(30) Priorité: 10.04.1998 FR 9804576
(43) Date de publication de la demande: 13.09.2000
(73) Titulaire: Renault s.a.s., 92100 Boulogne Billancourt (FR)
(72) Inventeur: GRANIER, Emmanuel, F-92800 Puteaux (FR)
(86) Numéro de dépôt international: PCT/FR1999/000821
(87) Numéro de publication internationale: WO 1999/053463

(56) Documents cités:
- EP-A- 0 737 952
- WO-A-88/00896
- WO-A-93/16452
- WO-A-95/22131

## Description

L'invention est relative à un procédé de déclenchement automatique d'un appel d'urgence à partir d'un véhicule vers une station d'assistance, ainsi qu'à un dispositif de mise en oeuvre de ce procédé.

Cette procédure d'appel d'urgence est destinée à assurer l'envoi d'informations, soit manuellement par appui sur un bouton soit automatiquement, à la suite d'un accident vers une station d'assistance dépêchant des moyens de secours vers le véhicule accidenté si besoin est. Ces informations émises depuis le véhicule sont par exemple sa localisation, son identification, des données sur les conditions de l'accident. Le fonctionnement global d'un exemple de réalisation d'un dispositif d'appel d'urgence est notamment décrit dans les demandes de brevets européens EP 0 737 952 A1 et EP 0 737 953 A1 au nom de FORD.

Actuellement, la détection d'un accident est souvent obtenue directement à partir de signaux de déclenchement d'un coussin gonflable ou "airbag" ou des systèmes prétensionneurs, qui appliquent une forte tension aux ceintures de sécurité au moment d'un choc. Le signal de déclenchement peut être lu par le système d'appel d'urgence, dont est équipé le véhicule, sur le bus de communication du véhicule. Or, ce bus de communication risque d'être endommagé à la suite d'un accident, ce qui rend cette solution peu fiable. De plus, dans le cas d'un accident qui provoquerait des courts-circuits, des ruptures de câbles ou la destruction de la batterie, le véhicule ne serait plus alimenté électriquement et ne pourrait donc plus émettre de signal d'appel d'urgence. Ainsi, dans de nombreux cas, le dispositif d'appel d'urgence ne peut détecter le signal de déclenchement des organes de sécurité.

Une solution actuelle décrite dans la demande de brevet anglais GB 2 300 996, au nom de MOTOROLA, consiste à ajouter des capteurs pour détecter le gonflement d'un "airbag" ou la déformation de la colonne de direction du véhicule. Mais l'importance des contraintes d'installation rend cette solution inadaptée à une seconde monte, en dehors de l'usine de montage du véhicule.

Une autre solution actuelle de détection d'un accident, décrite dans le brevet américain US 5 574 427, au nom de DELCO, consiste à analyser simultanément le signal acoustique capté par un microphone et le signal électrique généré par un accéléromètre. Le dispositif considère qu'un accident est survenu lorsqu'il a détecté à la fois un bruit impulsionnel généré par le gonflement de l'airbag et une forte décélération du véhicule, et dans ce cas déclenche un appel d'urgence.

Deux principaux inconvénients se présentent. D'une part, de très nombreux bruits impulsionnels surviennent dans l'habitacle d'un véhicule, comme par exemple, le claquement des portières, la chute d'un objet sur le microphone, et d'autre part l'installation de l'accéléromètre est très délicate, quant à son emplacement et à ses fixations. Cette solution est par conséquent peu adaptée à une monte hors usine.

Le but de l'invention est de proposer un dispositif de détection d'accident qui soit fiable et d'installation suffisamment simple pour être monté par les réseaux commerciaux, après la fabrication du véhicule en usine. De plus, le procédé de détection doit être générique pour s'adapter aux différents types de véhicules, sans ajout de capteurs en seconde monte.

Pour cela, un premier objet de l'invention est un procédé de déclenchement automatique d'un appel d'urgence à partir d'un véhicule vers une station d'assistance, le véhicule étant équipé d'au moins un capteur de choc, d'une alimentation électrique permanente et d'une alimentation électrique après contact, caractérisé en ce qu'il consiste à détecter un accident, pour commander automatiquement un appel d'urgence, à partir de l'analyse permanente dès la mise sous contact du véhicule de plusieurs signaux électriques représentant notamment :
- le niveau de l'alimentation électrique permanente ;
- le niveau de l'alimentation électrique après contact ;
- le niveau des signaux aux bornes du capteur de choc ;
- la vitesse de déplacement du véhicule.

Un second objet de l'invention est un dispositif de mise en oeuvre du procédé de déclenchement d'un appel d'urgence, caractérisé en ce qu'il comprend :
- une unité électronique de traitement comprenant notamment un microprocesseur associé à une mémoire ;
- un module de localisation du véhicule ;
- un comparateur associé à chacun des cinq signaux électriques analysés par l'unité de traitement et destinés à les traduire en valeurs binaires ;
- une alimentation électrique de secours ;
- un relais de commutation entre l'alimentation électrique permanente et l'alimentation de secours ;
- une alimentation tampon connectée entre le relais et l'unité de traitement et destinée à stocker une énergie électrique, en phase de fonctionnement normal, suffisante pour réaliser la commutation entre l'alimentation permanente devenue inutilisable en cas d'accident et l'alimentation de secours ;
- un module de communication par lequel est envoyé un signal d'appel d'urgence vers un service de secours.

D'autres caractéristiques et avantages de l'invention apparaîtront à la lecture de la description d'un mode de réalisation, illustrée par les figures suivantes qui sont :
- la figure 1 : un exemple d'architecture électronique du circuit d'alimentation en carburant d'un véhicule ;
- la figure 2 : le schéma électronique d'un dispositif de mise en oeuvre du procédé de déclenchement selon l'invention ;
- la figure 3 : les différentes étapes d'un mode de conception du procédé de déclenchement selon l'invention.

Les éléments portant les mêmes références sur les différentes figures remplissent les mêmes fonctions en vue des mêmes résultats.

Le procédé de déclenchement automatique d'un appel d'urgence selon l'invention consiste à analyser en permanence, dès la mise sous contact électrique, différents signaux électriques représentant l'état de l'alimentation électrique permanente du véhicule issue de la batterie et l'alimentation après contact, reliée à l'alimentation permanente par un interrupteur, la vitesse de déplacement du véhicule et les signaux obtenus aux bornes d'un capteur de choc du véhicule. Le procédé pouvant être facilement adapté à tout type de capteur de choc, un mode de réalisation préférentiel est décrit par la suite, à partir d'un contacteur à inertie qui est un interrupteur électrique s'ouvrant quand il est soumis à une forte décélération. Il est généralement utilisé pour couper l'alimentation en carburant à la suite d'un accident, dans le but d'éviter les risques d'incendie.

En cas de perte de l'alimentation permanente du véhicule, le procédé provoque l'émission d'un appel d'urgence, réalisable grâce à une alimentation de secours aussitôt connectée en cas de détection de choc.

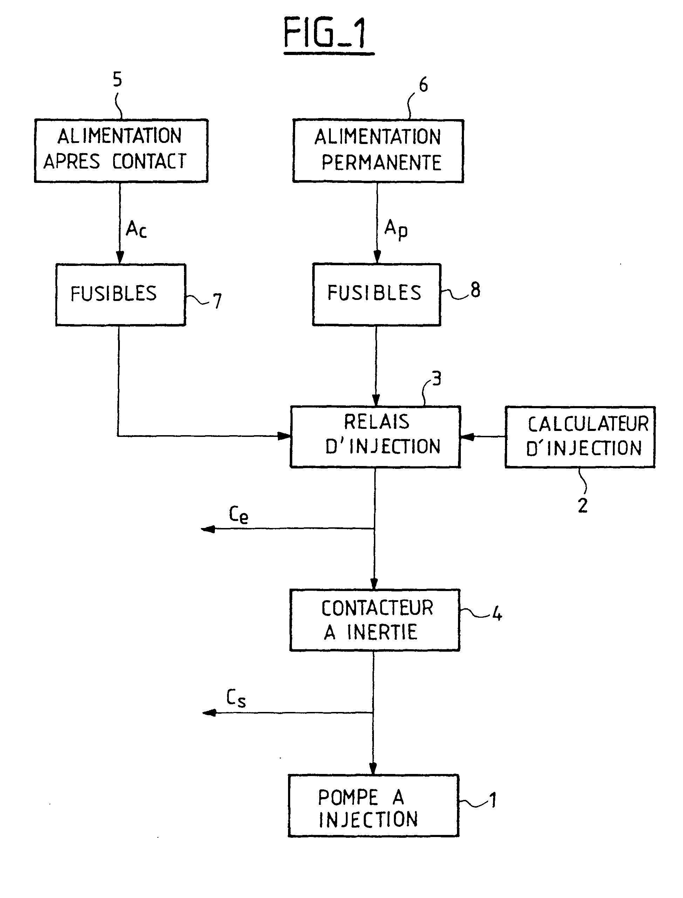

Selon la figure 1, qui est un exemple d'architecture d'un circuit électrique qui commande l'alimentation en carburant du moteur, cette alimentation est assurée par une pompe à injection 1, pilotée par le calculateur 2 d'injection du véhicule, par l'intermédiaire d'un relais d'injection 3 et d'un contacteur à inertie 4 placés en série. Le relais 3 est commandé par l'alimentation électrique après contact 5 et le calculateur d'injection 2. L'alimentation après-contact est reliée à l'alimentation permanente par un interrupteur 56. Ce relais 3 est ouvert lorsque le contact du véhicule est coupé, c'est-à-dire lorsque le niveau de l'alimentation après contact est bas. L'ouverture du relais peut également être commandée par le calculateur 2 après une temporisation de quelques secondes lorsque le moteur est arrêté, après qu'il ait calé par exemple. Lorsque le relais d'injection 3 et le contacteur à inertie 4 sont fermés, la pompe à injection 1 est alimentée électriquement par l'alimentation permanente 6 du véhicule issue de sa batterie.

Le contacteur à inertie 4 peut être ouvert à la suite d'un choc du véhicule, ce qui coupe l'alimentation de la pompe à injection. Des fusibles 7 et 8, en sortie respectivement de l'alimentation après contact 5 et de l'alimentation permanente 6, servent de protection contre de forts courants, dus par exemple à un court-circuit, en ouvrant le circuit.

La majorité des difficultés que soulève la détection d'accident à partir d'un contacteur à inertie sont liées précisément à l'architecture de ce circuit électrique de commande.

Les signaux de tension électrique Cₑ et Cₛ respectivement à l'entrée et à la sortie du contacteur à inertie sont observés pour détecter l'ouverture ou la fermeture de celui-ci. En fonctionnement normal, ces tensions électriques sont simultanément au niveau haut quand le relais d'injection 3 est fermé par la calculateur d'injection 2 et au niveau bas quand il est ouvert.

A la suite d'un accident, la tension Cₛ en sortie du contacteur à inertie sera au niveau bas ou à l'état haute impédance dans le cas de rupture de câbles. Par contre, la tension Cₑ en entrée peut prendre plusieurs valeurs, en fonction des conséquences de l'accident qui peut provoquer des ruptures de câbles, des destructions de composants ou des courts-circuits. En conséquence, les alimentations électriques 5 et 6 peuvent ne plus être disponibles, les fusibles grillés et les éléments, comme le calculateur d'injection 2, le relais 3 et le contacteur à inertie 4, détruits de sorte que la tension d'entrée Cₑ peut être au niveau haut, au niveau bas ou à l'état haute impédance.

On constate ainsi qu'il est difficile de prévoir l'état des alimentations électriques et l'évolution des signaux électriques après un accident.

La nature et l'ordre de déroulement des différents événements comme l'ouverture du contacteur à inertie, la rupture des fusibles ou la destruction des composants, dépendent des conditions de l'accident, c'est-à-dire de la force et de la direction de l'impact par exemple. Le tableau en annexe récapitule l'état des signaux électriques Cₑ et Cₛ en entrée et en sortie du contacteur à inertie, ainsi que A_{c} et Aₚ en sortie des alimentations après contact 5 et permanente 6 respectivement, un état haut se traduisant par un bit égal à 1 et un état bas ou haute impédance par un bit égal à 0. On peut constater que l'état de ces quatre signaux ne permet pas de déterminer la survenue d'un accident dans les trois derniers cas III, IV et V.

Selon l'invention, le procédé de déclenchement d'un appel d'urgence tient compte de la vitesse de déplacement du véhicule pour résoudre les trois cas ambigus et considère qu'une modification d'un des quatre signaux Cₑ, Cₛ, A_{c} et Aₚ survenant alors que la vitesse est importante, supérieure à un seuil prédéterminé Vₛ, est consécutive à un accident, qui mérite d'envoyer un appel automatique d'urgence.

A vitesse faible, inférieure au seuil Vₛ, l'indétermination du cas V du tableau est due au fait que l'on ne sait si la batterie du véhicule s'est déconnectée, le contact étant mis, ou si le démarrage a eu lieu avec une faible charge de la batterie. Le procédé selon l'invention prévoit donc de mesurer la distance parcourue depuis le dernier démarrage du moteur et de la comparer à un seuil prédéterminé Dₛ, pour ne déclencher un appel d'urgence que dans le cas d'un déplacement réel du véhicule dû au fonctionnement du moteur.

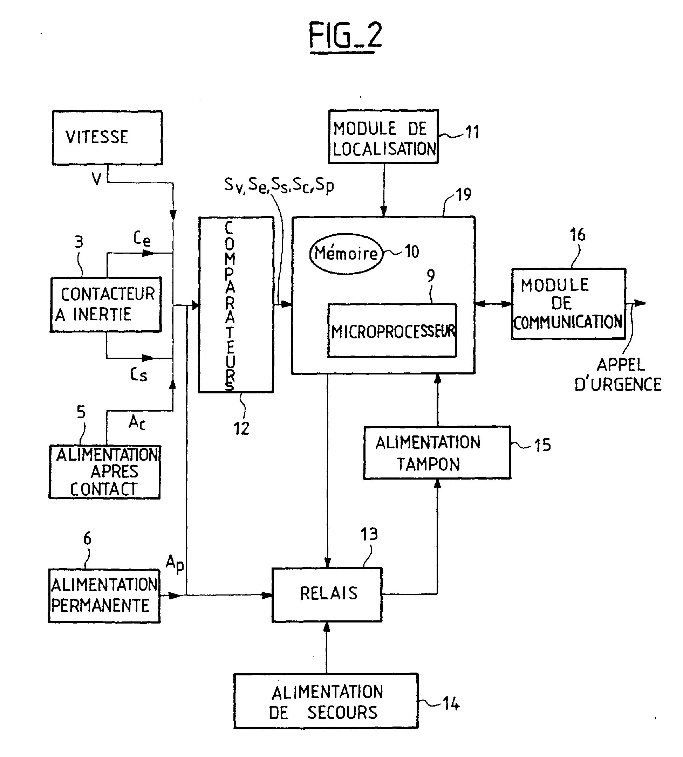

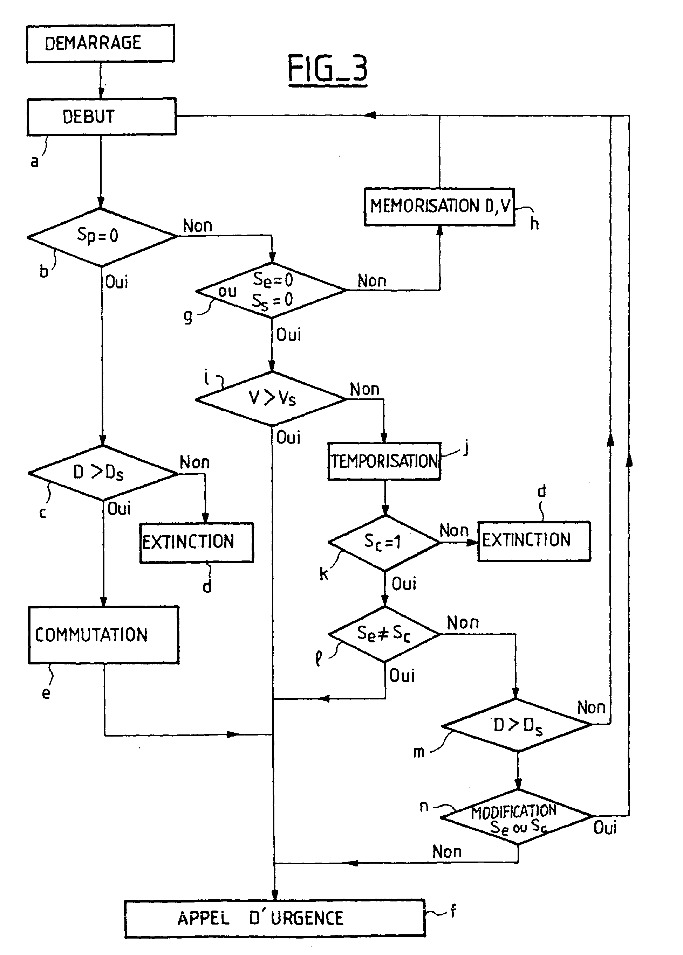

Le procédé de déclenchement selon l'invention sera décrit plus en détail à propos de la description de la figure 3. Il est mis en oeuvre par un dispositif, dont un exemple de réalisation est décrit en relation avec la figure 2. Le dispositif comprend une unité électronique de traitement 19, comprenant notamment un microprocesseur 9 destiné à gérer l'ensemble des opérations effectuées et associé à une mémoire 10, contenant les instructions exécutées par le microprocesseur ainsi que les différentes données nécessaires au fonctionnement du dispositif. Ces données sont notamment la localisation instantanée du véhicule délivrée par un module 11 de localisation, sa vitesse, les états des signaux électriques.

Cinq comparateurs 12, associés chacun à un des cinq signaux précédents Cₑ, Cₛ, A_{c}, Aₚ, et la vitesse de déplacement V qui sont compris entre 0 et 12 volts, tension maximale de la batterie du véhicule, traduisent ces signaux en valeurs binaires égales à 0 ou 1. La valeur binaire 0 correspond au niveau bas défini par des tensions électriques inférieures à un premier seuil, de 2 volts par exemple, ou à un point du circuit électrique à haute impédance, donc sans liaison électrique avec les potentiels de référence. La valeur binaire 1 correspond au niveau défini par des tensions électriques supérieures à un second seuil prédéfini, de 4 volts par exemple.

Le microprocesseur 9 analyse en permanence les cinq signaux mentionnés auparavant et traduits en valeurs binaires, soit le niveau Sₚ de l'alimentation électrique permanente 6 du véhicule, égal à 1 en conditions normales, le niveau S_{c} de l'alimentation après contact 5, qui est à l'état 1 quand le contact est mis et à l'état 0 dans le cas contraire, les signaux en entrée Sₑ et en sortie Sₛ du contacteur à inertie 3 et la vitesse Sᵥ de déplacement du véhicule. Si la vitesse est définie par une série de fronts montants et de fronts descendants, le microprocesseur compte le nombre de fronts par seconde pour en déduire la valeur de la vitesse.

L'alimentation électrique permanente 6 est également utilisée pour fournir l'énergie électrique aux différents composants du dispositif selon l'invention.

Or, elle risque de ne plus être utilisable à la suite d'un accident, présentant alors un niveau de sortie haute impédance. C'est pourquoi le dispositif comprend un relais 13 destiné à basculer l'alimentation du microprocesseur et de la mémoire vers une alimentation de secours 14, de type batterie ou accumulateur par exemple, dont l'autonomie est suffisante pour assurer la composition et l'envoi d'un signal d'appel d'urgence. Une alimentation tampon 15, constituée par exemple d'un condensateur et d'une diode, est connectée entre le relais 13 et le microprocesseur 9 et stocke une énergie électrique, en phase de fonctionnement normal, suffisante pour la phase de commutation entre l'alimentation permanente 6 devenue inutilisable et l'alimentation de secours 14.

Lorsqu'un signal d'appel d'urgence est envoyé au service de secours, c'est par l'intermédiaire d'un module 16 de communication, constituée par exemple d'un émetteur/récepteur pour un réseau de radiotéléphonie mobile comme le réseau G.S.M. "Global System for Mobile Communication". Le message de données contient en particulier la localisation géographique du véhicule ainsi que les cinq signaux S_{c} et Sₚ d'alimentation, Sₑ et Sₛ du contacteur d'inertie et la vitesse Sᵥ en vue d'une analyse plus fine des circonstances de l'accident.

La figure 3 est un exemple de conception du procédé de déclenchement selon l'invention, composé de différentes étapes qui démarrent dès la mise en contact du véhicule, donc quand le signal électrique S_{c} traduisant le niveau de sortie de l'alimentation après contact 5 est égal à 1.

Le démarrage déclenché avec le contact du véhicule est suivi d'une étape (a) de début du processus, puis une étape (b) prioritaire a lieu en permanence, consistant à vérifier le niveau de sortie Sₚ de l'alimentation électrique permanente 6, donc à le comparer à la valeur 0 à laquelle l'alimentation est considérée comme coupée.

Si le microprocesseur 9 détecte le niveau 0 pour le signal Sₚ, la coupure de l'alimentation permanente interrompt toute action du microprocesseur en cours, lors de n'importe quelle étape.

A l'étape (c) suivante, la distance D parcourue par le véhicule depuis le dernier démarrage d'appel d'urgence est comparée à un seuil Dₛ - 10 mètres par exemple - . Si la distance D parcourue est inférieure au seuil Dₛ, le dispositif d'appel d'urgence est éteint à l'étape (d).
Ce test est réalisé, car au démarrage, la tension d'alimentation du véhicule, qui est habituellement voisine de 12 volts, peut chuter jusqu'à un niveau très bas, ce qui entraînerait l'utilisation de la batterie de secours et l'envoi d'un appel d'urgence, injustifié dans ce cas.

Si la distance D parcourue est supérieure au seuil, le microprocesseur 9 commande la commutation du relais 13 - étape (e) - de façon à ce que le dispositif d'appel soit alors alimenté par la batterie de secours 14, après avoir tiré l'énergie électrique nécessaire de l'alimentation tampon 15, pour la commutation.

A l'étape (f), il déclenche un signal d'appel d'urgence car la perte de l'alimentation permanente du véhicule indique très probablement un accident.

Dans le cas où le résultat de l'étape (b) montre que le niveau de l'alimentation permanente est égal à 1, le procédé comprend une étape suivante (g) de comparaison des signaux Sₑ et Sₛ du contacteur à inertie avec la valeur 0.
Si les deux signaux sont simultanément égaux à 1, ce qui correspond aux conditions normales d'un moteur tournant, une étape (h) suivante consiste à calculer la distance D parcourue depuis le démarrage du véhicule puis à la mémoriser ainsi que la vitesse du véhicule.

Le microprocesseur peut calculer cette distance D parcourue à l'instant t à partir de la vitesse mesurée, ajoutée à la distance stockée à l'instant précédent t-1.

Après cette mémorisation, le microprocesseur retourne à l'étape initiale (a) de début du procédé.

Dans le cas où l'étape (g) de comparaison montre qu'un des deux signaux S_{c} ou Sₛ est égal à 0, le procédé cherche à savoir, à l'étape (i), si la vitesse V de déplacement du véhicule est supérieure à un seuil maximal Vₛ, fixé à 30 km/h par exemple, au-delà duquel il considère qu'un accident éventuel est grave.

Ainsi, dans le cas où la vitesse V est supérieure au seuil Vₛ, le passage d'un de ces deux signaux Sₑ ou Sₛ de l'état 1 à l'état 0 est supposé consécutif à un accident et le procédé déclenche un appel d'urgence à l'étape (f).

Dans le cas contraire, où la vitesse est inférieure au seuil, le procédé détecte si le contact est mis ou non. Pour cela, après une étape (j) de temporisation, de l'ordre de 2 secondes par exemple, destinée à éviter les phénomènes transitoires, le procédé vérifie la valeur du signal S_{c} d'alimentation après contact, à l'étape (k).

Si le signal S_{c} est égal à 0, le contact n'est pas mis et le procédé éteint le dispositif d'appel d'urgence à l'étape (d).

Par contre, si le signal S_{c} est égal à 1, l'étape suivante (1) compare les deux signaux Sₑ et Sₛ entre eux : s'ils sont différents, cela signifie que le contacteur à inertie est ouvert alors que le contact est mis, donc qu'il y a eu un choc. Dans ce cas, le procédé déclenche un appel d'urgence par l'étape (f).

Si les signaux Sₑ et Sₛ sont identiques et égaux à 0, le procédé doit vérifier si le véhicule s'est déplacé. En effet, le contact étant mis pendant plusieurs secondes comme cela est constaté à l'étape (k), si le moteur ne démarre pas, donc si le véhicule ne se déplace pas, le calculateur d'injection commande l'ouverture du relais d'injection et le signal Sₑ en entrée du contacteur à inertie est égal à 0 comme son signal Sₛ en sortie.

L'étape (m) consiste à comparer la distance D parcourue par le véhicule avec un seuil maximal Dₛ, fixé par exemple à 10m.

Si la distance D est inférieure au seuil Dₛ, on considère que le moteur a calé et le procédé retourne à l'étape (a) de début pour remplir les étapes consécutives (g), (i), (j), (k) et (d).

Si la distance D est supérieure au seuil Dₛ, le procédé vérifie pendant une étape de temporisation (n), d'environ 30 secondes par exemple, si une modification des signaux Sₑ et Sₛ intervient. Si oui, c'est que le moteur a calé et le procédé retourne au début. Sinon, il y a eu un accident et un appel d'urgence est déclenché à l'étape (f).

Cette étape (n) est destinée à différencier le cas d'un accident du cas où le moteur cale, avec redémarrage probable du moteur ou coupure du contact dans les 30 secondes suivantes par le conducteur du véhicule.

Lors du déclenchement d'un appel d'urgence, le microprocesseur du dispositif envoie également à la station de secours les signaux Sₑ et Sₛ du contacteur à inertie, le signal S_{c} de l'alimentation après contact, le signal Sₚ de l'alimentation permanente et la vitesse Sᵥ, en plus des données de localisation ou d'identification du véhicule. Grâce à ces cinq signaux, les secours peuvent analyser les différents états et prévoir les cas probables de fausses alertes.

Le procédé et le dispositif de mise en oeuvre qui viennent d'être décrits sont particulièrement adaptés à une installation sur véhicule en seconde monte.

En effet, étant basée sur l'analyse des signaux électriques en sortie de composants montés en série sur le véhicule, ils bénéficient de la garantie de l'installation de ces composants en usine.

De plus, la fiabilité de la détection d'un accident par ce procédé est grande car les ruptures de câbles ou la destruction d'organes pendant un accident n'empêche pas l'émission d'un appel d'urgence.

Cette solution s'adapte à un grand nombre de véhicules car l'introduction d'un composant pour couper l'arrivée de carburant dans le moteur s'est généralisée.

## Revendications

1. Procédé de déclenchement automatique d'un appel d'urgence à partir d'un véhicule vers une station d'assistance, le véhicule étant équipé d'au moins un capteur de choc, d'une alimentation électrique permanente et d'une alimentation électrique après contact, **caractérisé en ce qu'**il consiste à détecter un accident, pour commander automatiquement un appel d'urgence, à partir de l'analyse permanente dès la mise sous contact du véhicule de plusieurs signaux électriques représentant :
- le niveau de l'alimentation électrique permanente (Sₚ);
- le niveau de l'alimentation électrique après contact (S_{c}) ;
- le niveau des signaux (Sₑ) et (Sₛ) aux bornes du capteur de choc ;
- la vitesse (Sᵥ) de déplacement du véhicule.

2. Procédé de déclenchement selon la revendication 1, **caractérisé en ce que**, en cas de perte de l'alimentation électrique permanente, il comprend une étape (e) de commutation vers une alimentation de secours pour réaliser une étape (f) de déclenchement d'un appel d'urgence.

3. Procédé de déclenchement selon la revendication 1, **caractérisé en ce qu'**en cas de perte de l'alimentation électrique permanente et à condition que la distance (D) parcourue par le véhicule depuis le dernier démarrage d'appel d'urgence soit supérieure à un seuil déterminé (Dₛ), il comprend une étape (e) de commutation vers une alimentation de secours pour réaliser une étape (f) de déclenchement d'un appel d'urgence.

4. Procédé de déclenchement selon la revendication 1, **caractérisé en ce que**, dans le cas où la vitesse (Sᵥ) de déplacement du véhicule est supérieure à un seuil (Vₛ), si le niveau d'un des quatre autres signaux électriques analysés passe du niveau 1 au niveau 0, il déclenche un appel d'urgence.

5. Procédé de déclenchement selon la revendication 1, **caractérisé en ce que**, dans le cas où le niveau de l'alimentation électrique permanente est 1 et qu'un des signaux électriques représentatifs de l'entrée (Sₑ) ou de la sortie (Sₛ) du capteur de choc est au niveau 0, si la vitesse (Sᵥ) de déplacement du véhicule est inférieure à un seuil (Vₛ) et si le contact est mis, il déclenche un appel d'urgence.

6. Procédé de déclenchement selon la revendication 1, **caractérisé en ce que**, dans le cas où le niveau de l'alimentation électrique permanente est 1 et que les deux signaux électriques (Sₑ) et (Sₛ) aux bornes du capteur de choc sont simultanément au niveau 0, si la vitesse (Sᵥ) de déplacement du véhicule est inférieure à un seuil (Vₛ) et si le contact est mis, il comprend une étape (m) de comparaison de la distance (D), parcourue par le véhicule depuis le dernier démarrage d'appel d'urgence, avec un seuil (Dₛ) suivie, dans le cas de dépassement de ce seuil, d'une étape de temporisation destinée à différencier le cas où le moteur cale, pour retourner à l'étape (a) du début du procédé, du cas où le véhicule est accidenté pour déclencher une étape (f) d'appel d'urgence.

7. Procédé de déclenchement selon la revendication 1, **caractérisé en ce que**, dans le cas où le niveau de l'alimentation électrique permanente est 1 et que les deux signaux électriques (Sₑ) et (Sₛ) aux bornes du capteur de choc sont au niveau 1, il réalise une étape (h) de calcul de la distance (D) parcourue depuis le démarrage du véhicule, et de mémorisation de cette distance (D) ainsi que de la vitesse de déplacement du véhicule.

8. Procédé de déclenchement selon l'une des revendications 1 à 7, **caractérisé en ce que** le capteur de choc est un contacteur à inertie (4) qui est placé dans un circuit électrique de commande de l'alimentation en carburant du moteur, pour être associé à une pompe à injection (1) et qui est destiné à s'ouvrir sous l'effet d'un choc pour couper l'alimentation en carburant du moteur par la pompe (1).

9. Dispositif de mise en oeuvre du procédé de déclenchement d'un appel d'urgence selon l'une des revendications 1 à 8, **caractérisé en ce qu'**il comprend :
- une unité électronique de traitement (19) comprenant notamment un microprocesseur (9) associé à une mémoire (10) ;
- un module (11) de localisation du véhicule ;
- un comparateur (12) associé à chacun des cinq signaux électriques analysés par le microprocesseur (9) et destiné à les traduire en valeurs binaires ;
- une alimentation électrique de secours (14) ;
- un relais (13) de commutation entre l'alimentation électrique permanente (6) et l'alimentation de secours (14) ;
- une alimentation tampon (15) connectée entre le relais (13) et l'unité de traitement (19) et destinée à stocker une énergie électrique, en phase de fonctionnement normal, suffisante pour réaliser la commutation entre l'alimentation permanente (6) devenue inutilisable en cas d'accident et l'alimentation de secours (14) ;
- un module (16) de communication par lequel est envoyé un signal d'appel d'urgence vers un service de secours.

10. Dispositif selon la revendication 9, **caractérisé en ce que** l'alimentation électrique de secours (14) est de type batterie ou accumulateur, dont l'autonomie est suffisante pour assurer la composition et l'envoi d'un signal d'appel d'urgence.

11. Dispositif selon la revendication 10, **caractérisé en ce que** l'alimentation tampon (15) est constituée par un condensateur et une diode.

12. Dispositif selon la revendication 9, **caractérisé en ce que** le module (16) de communication est constitué par un émetteur-récepteur pour réseau de radiotéléphonie mobile, de type G.S.M. "Global System for Mobile Communication" par exemple.

13. Dispositif selon la revendication 9, **caractérisé en ce que** le signal d'appel d'urgence, envoyé par le module (16) de communication vers un service de secours, contient en particulier la localisation géographique du véhicule ainsi que les cinq signaux électriques représentant le niveau de l'alimentation permanente (Sₚ) et de l'alimentation après contact (S_{c}), le niveau des signaux (Sₑ et S_{c}) aux bornes du capteur de choc et la vitesse (Sᵥ) de déplacement du véhicule.

## Claims

1. A method for the automatic triggering of an emergency call from a vehicle to an assistance station, the vehicle being equipped with at least one impact sensor, a permanent electrical supply and a post-contact electrical supply, **characterised in that** it consists in detecting an accident, in order automatically to command an emergency call, from the permanent analysis, as soon as the vehicle is started, of a plurality of electrical signals representing:
- the level of the permanent electrical supply (Sₚ),
- the level of the post-contact electrical supply (S_{c}),
- the level of the signals (Sₑ) and (Sₛ) at the terminals of the impact sensor,
- the speed (Sᵥ) of travel of the vehicle.

2. A triggering method as claimed in claim 1, **characterised in that**, if the permanent electrical supply is lost, it comprises a stage (e) of switching to an emergency supply in order to carry out a stage (f) of triggering of an emergency call.

3. A triggering method as claimed in claim 1, **characterised in that**, if the permanent electrical supply is lost and provided that the distance (D) travelled by the vehicle since the last emergency call was triggered is greater than a predetermined threshold (Dₛ), it comprises a stage (e) of switching to an emergency supply in order to carry out a stage (f) of triggering of an emergency call.

4. A triggering method as claimed in claim 1, **characterised in that**, if the speed (Sᵥ) of travel of the vehicle is greater than a threshold (Vₛ), and if the level of one of the other four electrical signals analysed switches from level 1 to level 0, it triggers an emergency call.

5. A triggering method as claimed in claim 1, **characterised in that**, if the level of the permanent electrical supply is 1 and one of the electrical signals representative of the input (Sₑ) or the output (Sₛ) of the impact sensor is at level 0, and if the speed (Sᵥ) of travel of the vehicle is below a threshold (Vₛ) and if the ignition is on, it triggers an emergency call.

6. A triggering method as claimed in claim 1, **characterised in that**, if the level of the permanent electrical supply is 1 and the two electrical signals (Sₑ) and (Sₛ) at the terminals of the impact sensor are simultaneously at level 0, if the speed (Sᵥ) of travel of the vehicle is lower than a threshold (Vₛ) and if the ignition is on, it comprises a stage (m) of comparison of the distance (D) travelled by the vehicle since the last emergency call was triggered with a threshold (Dₛ) followed, if this threshold is exceeded, by a timing stage adapted to differentiate the case in which the engine stalls in order to return to the initial stage (a) of the method, from the case in which the vehicle is in an accident in order to trigger an emergency call stage (f).

7. A triggering method as claimed in claim 1, **characterised in that**, if the level of the permanent electrical supply is 1 and the two electrical signals (Sₑ) and (Sₛ) at the terminals of the impact sensor are at level 1, it carries out a stage (h) of calculation of the distance (D) travelled by the vehicle since it was started and of memory storage of this distance (D) as well as the speed of travel of the vehicle.

8. A triggering method as claimed in one of claims 1 to 7, **characterised in that** the impact sensor is an inertia contactor (4) which is disposed in an electrical control circuit for the fuel supply of the engine in order to be associated with an injection pump (1) and which is adapted to be opened under the effect of an impact in order to cut off the fuel supply to the engine by the pump (1).

9. A device for the application of the method for the triggering of an emergency call as claimed in one of claims 1 to 8, **characterised in that** it comprises:
- an electronic processing unit (19) in particular comprising a microprocessor (9) associated with a memory (10),
- a vehicle location module (11),
- a comparator (12) associated with each of the five electrical signals analysed by the microprocessor (9) and adapted to translate them into binary values,
- an emergency electrical supply (14),
- a relay (13) adapted to switch between the permanent electrical supply (6) and the emergency supply (14),
- a buffer supply (15) connected between the relay (13) and the processing unit (19) and adapted to store enough electrical energy, during normal operation, to carry out the switching between the permanent supply (6) which has become unusable in the case of an accident and the emergency supply (14),
- a communication module (16) via which an emergency call signal is sent to an emergency service.

10. A device as claimed in claim 9, **characterised in that** the emergency electrical supply (14) is of the battery or cell type and is sufficiently autonomous to ensure the dialling and sending of an emergency call signal.

11. A device as claimed in claim 10, **characterised in that** the buffer supply (15) is formed by a capacitor and a diode.

12. A device as claimed in claim 9, **characterised in that** the communication module (16) is formed by a transmitter-receiver for a mobile radiotelephony network, for instance of the GSM (Global System for Mobile Communication) type.

13. A device as claimed in claim 9, **characterised in that** the emergency call signal sent by the communication module (16) to an emergency service in particular contains the geographical location of the vehicle and the five electrical signals representing the level of the permanent supply (Sₚ) and the post-contact supply (S_{c}), the level of the signals (Sₑ) and (S_{c}) at the terminals of the impact sensor and the speed (Sᵥ) of travel of the vehicle.

## Patentansprüche

1. Verfahren zur automatischen Auslösung eines Notrufs ausgehend von einem Fahrzeug zu einer Assistenzstation, wobei das Fahrzeug mit mindestens einem Aufprallsensor, einer elektrischen permanenten Versorgung und einer elektrischen Versorgung nach Kontakt ausgestattet ist, **dadurch gekennzeichnet, dass** es darin besteht, einen Unfall zu erfassen, um automatisch einen Notruf ausgehend von der permanenten Analyse ab dem InKontaktbringen des Fahrzeugs von mehreren elektrischen Signalen zu steuern, welche repräsentieren:
- das elektrische permanente Versorgungsniveau (Sₚ);
- das elektrische Versorgungsniveau nach Kontakt (S_{c});
- das Niveau von Signalen (Sₑ) und (Sₛ) an den Klemmen des Aufprallsensors;
- die Fahrgeschwindigkeit (Sᵥ) des Fahrzeugs.

2. Verfahren zur Auslösung nach Anspruch 1, **dadurch gekennzeichnet, dass** es im Falle eines Verlusts der elektrischen permanenten Versorgung einen Schritt (e) einer Umschaltung zu einer Notfallversorgung aufweist, um einen Schritt (f) eines Auslösens eines Notrufs zu realisieren.

3. Verfahren zur Auslösung nach Anspruch 1, **dadurch gekennzeichnet, dass** es im Falle eines Verlusts der elektrischen permanenten Versorgung und unter der Bedingung, dass die Distanz (D), welche das Fahrzeug seit dem letzten Start eines Notrufs gelaufen ist, größer als eine festgelegte Schwelle (Dₛ) ist, einen Schritt (e) einer Umschaltung zu einer Notfallversorgung aufweist, um einen Schritt (f) eines Auslösens eines Notrufs zu realisieren.

4. Verfahren zur Auslösung nach Anspruch 1, **dadurch gekennzeichnet, dass** es in dem Fall, in welchem die Fahrgeschwindigkeit (Sᵥ) des Fahrzeugs größer als eine Schwelle (Vₛ) ist, wenn das Niveau von einem der vier anderen elektrischen, analysierten Signale vom Niveau 1 zum Niveau 0 geht, einen Notruf auslöst.

5. Verfahren zur Auslösung nach Anspruch 1, **dadurch gekennzeichnet, dass** es in dem Fall, in welchem das Niveau der elektrischen permanenten Versorgung 1 ist und dass eines der elektrischen Signale, welche für den Eingang (Sₑ) oder für den Ausgang (Sₛ) des Aufprallsensors repräsentativ sind, auf dem Niveau 0 ist, wenn die Fahrgeschwindigkeit (Sᵥ) des Fahrzeugs niedriger als eine Schwelle (Vₛ) ist und wenn der Kontakt gesetzt ist, einen Notruf auslöst.

6. Verfahren zur Auslösung nach Anspruch 1, **dadurch gekennzeichnet, dass** es in dem Fall, in welchem das Niveau der elektrischen permanenten Versorgung 1 ist und dass die beiden elektrischen Signale (Sₑ) und (Sₛ) an den Klemmen des Aufprallsensors gleichzeitig auf dem Niveau 0 sind, wenn die Fahrgeschwindigkeit (Sᵥ) des Fahrzeugs niedriger als eine Schwelle (Vₛ) ist und wenn der Kontakt gesetzt ist, einen Schritt (m) eines Vergleichs der Distanz (D), welche das Fahrzeug seit dem letzten Start eines Notrufs gelaufen ist, mit einer verfolgten Schwelle (Dₛ) aufweist, in dem Fall eines Überschreitens dieser Schwelle von einem Schritt einer Verzögerung, der dafür bestimmt ist, den Fall zu unterscheiden, in welchem der Motor blockiert, um zu Schritt (a) des Beginns des Verfahrens zurückzukehren, von dem Fall, in welchem das Fahrzeug einen Unfall hat, um einen Schritt (f) eines Notrufs auszulösen.

7. Verfahren zur Auslösung nach Anspruch 1, **dadurch gekennzeichnet, dass** es in dem Fall, in welchem das Niveau der elektrischen permanenten Versorgung 1 ist und dass die beiden elektrischen Signale (Sₑ) und (Sₛ) an den Klemmen des Aufprallsensors auf dem Niveau 1 sind, einen Schritt (h) einer Berechnung der Distanz (D), die seit dem Start des Fahrzeugs gelaufen wurde, und einer Speicherung dieser Distanz (D) sowie der Fahrgeschwindigkeit des Fahrzeugs aufweist.

8. Verfahren zur Auslösung nach einem der Ansprüche 1 bis 7, **dadurch gekennzeichnet, dass** der Aufprallsensor ein Trägheitskontaktgeber (4) ist, der in einer elektrischen Steuerschaltung der Kraftstoffversorgung des Motors eingesetzt ist, um einer Einspritzpumpe (1) hinzugefügt zu sein, und welcher dafür bestimmt ist, sich unter der Wirkung eines Aufpralls zu öffnen, um die Kraftstoffversorgung des Motors durch die Pumpe (1) abzuschalten.

9. Vorrichtung zur Umsetzung des Verfahrens zur Auslösung eines Notrufs nach einem der Ansprüche 1 bis 8, **dadurch gekennzeichnet, dass** sie aufweist:
- eine elektronische Einheit zur Behandlung (19), aufweisend insbesondere einen Mikroprozessor (9), der einem Speicher (10) hinzugefügt ist;
- ein Modul (11) zur Ortsbestimmung des Fahrzeugs;
- einen Komparator (12), der jedem von fünf elektrischen Signalen hinzugefügt ist, welche durch den Mikroprozessor (9) analysiert werden, und dafür bestimmt ist, sie in binäre Werte zu übertragen;
- eine elektrische Notfallversorgung (14);
- ein Relais (13) zur Umschaltung zwischen der elektrischen permanenten Versorgung (6) und der Notfallversorgung (14);
- eine Pufferversorgung (15), welche zwischen dem Relais (13) und der Einheit zur Behandlung (19) verbunden ist und dafür bestimmt ist, eine elektrische Energie in der normalen Betriebsphase zu speichern, die ausreichend ist, um die Umschaltung zwischen der permanenten Versorgung (6), die im Falle eines Unfalls unbenutzbar geworden ist, und der Notfallversorgung (14) zu realisieren;
- ein Modul (16) zur Kommunikation, über welches ein Notrufsignal zu einem Notdienst gesendet wird.

10. Vorrichtung nach Anspruch 9, **dadurch gekennzeichnet, dass** die elektrische Notfallversorgung (14) von der Art Batterie oder Akkumulator ist, dessen Autonomie ausreichend ist, um das Zusammensetzen und das Aussenden eines Notrufssignals zu gewährleisten.

11. Vorrichtung nach Anspruch 10, **dadurch gekennzeichnet, dass** die Pufferversorgung (15) durch einen Kondensator und eine Diode gebildet ist.

12. Vorrichtung nach Anspruch 9, **dadurch gekennzeichnet, dass** das Modul (16) zur Kommunikation durch einen Sender-Empfänger für ein Netz eines mobilen Funktelefons, z.B. von der Art G.S.M. "Global System for Mobile Communication", gebildet ist.

13. Vorrichtung nach Anspruch 9, **dadurch gekennzeichnet, dass** das Notrufsignal, welches durch das Modul (16) zur Kommunikation in Richtung zu einem Notdienst gesendet wird, insbesondere die geographische Ortsbestimmung des Fahrzeugs sowie die fünf elektrischen Signale enthält, welche das Niveau der permanenten Versorgung (Sₚ) und der Versorgung nach dem Kontakt (S_{c}), das Niveau der Signale (Sₑ und S_{c}) an den Klemmen des Aufprallsensors und die Fahrgeschwindigkeit (Sᵥ) des Fahrzeugs repräsentieren.
